# EUROPEAN PATENT SPECIFICATION

(11) **EP 2 121 365 B1**
(45) Date of publication and mention of the grant of the patent: **23.05.2012**
(21) Application number: 08705393.0
(22) Date of filing: 08.02.2008
(51) Int. Cl.: B60K 15/03, B60K 15/067

(54) **FUEL TANK ARRANGEMENT FOR A VEHICLE**
KRAFTSTOFFBEHÄLTERANORDNUNG FÜR EIN FAHRZEUG
AGENCEMENT DE RESERVOIR A CARBURANT POUR VEHICULE

(30) Priority: 26.02.2007 SE 0700479
(43) Date of publication of application: 25.11.2009
(73) Proprietor: Scania CV AB, 151 87 Södertälje (SE)
(72) Inventor: LILJEKVIST, Johan, S-118 47 Stockholm (SE); KRISTOFERSSON, Donald, S-153 71 Hölö (SE)
(86) International application number: PCT/SE2008/050157
(87) International publication number: WO 2008/105722

(56) References cited:
- DE-A1- 19 644 464
- DE-C1- 3 940 026
- DE-U1- 9 311 357
- JP-A- 2004 074 991

## Description

The present invention relates to a fuel tank arrangement for a vehicle, in particular for a heavy load vehicle driven by a diesel engine, said fuel tank arrangement comprising:
- a fuel tank for receiving and storing fuel,
- a fuel filter element for separating water from the stored fuel, and
- a water container for storing water separated from the fuel.

In fuel tanks, in particular in diesel fuel tanks, during the operation of vehicles, a considerable amount of water is accumulated due to condensing effects. This results from the fact that diesel fuel regularly includes a certain proportion of water which accumulates at the bottom of the fuel tank. In order to guarantee a failure-free operation of the engine and the associated engine components, as injection pumps electronic controlling means, fuel sensors etc., the accumulated water should be separated from the fuel before the latter is supplied to the engine. Therefore, modern vehicles include a water separating device, also called water filter.

A corresponding fuel tank arrangement including a water filter is already known from DE 39 40 026 C1. This arrangement shows a fuel tank having a filter arrangement which protrudes downwards from the bottom of the fuel tank. This arrangement requires substantial space in the vehicle. Moreover, this fuel tank arrangement provides a restricted access to the filter element for maintenance purposes.

A similar arrangement is also known from SU 1444179 A1. This document also shows a possibility of arranging water filters outside the fuel tank.

Alternatively, the prior art documents according to US 5,662,089 and EP 1 596 057 A2 show filter arrangements which are accommodated within the interior of a fuel tank. Such arrangements provide a very limited access to the filter.

JP 2004 074 991 A is considered to represent the closest prior art and discloses all the features of the preamble of claim 1.

Finally, the German Utility Model DE 9311357 U1 discloses a filter element which is fixed to a tank arrangement by means of a snap fit connection.

The above solutions show a plurality of different ways of arranging a filter component on a fuel tank. These solutions, as outlined above, provide substantial drawbacks in terms of a limited access as well as the requirement of space.

It is therefore the object of the present invention to provide a fuel tank arrangement for a vehicle, which does not require additional space when mounting into a vehicle and which provides easy access for maintenance purposes.

This object is solved by a fuel tank arrangement for a vehicle, in particular for a heavy load vehicle driven by a diesel engine, according to claim 1.

According to the invention, the invention, the fuel tank is provided with a fuel tank mounting structure for mounting said fuel tank to a vehicle chassis, wherein said fuel tank mounting structure forms a recess in which the water container is accommodated. Preferably, said fuel tank mounting structure comprises two carrier elements mounted to the outer periphery of said fuel tank. Thus the fuel tank is not provided with a depression or the like but said recess is formed by a gap between the two carrier elements of the fuel tank mounting structure. Thereby, the water container can be accommodated in a space-saving manner while being accessible from the outside of the fuel tank.

According to a further embodiment of the invention, said fuel filter element is also arranged within said recess to be accessible from the outside of the fuel tank. This means that, besides the fuel tank, also the fuel filter element is arranged within said recess. Thus, no provisions have to be made for integrating the water container and/or the filter element in the interior of the fuel tank. Arranging the filter element outside of the fuel tank further facilitates the maintenance of the whole arrangement. Filter elements or filter cartridges arranged within a filter element are to be cleaned or even replaced in regular maintenance intervals. Arranging such a filter element outside the fuel tank permits conducting such maintenance steps in a less time-consuming manner.

According to a further embodiment of the invention, said filter element and said water container are connected to each other. Preferably, both the filter element and the water container are arranged as a compact and stabile unit.

As mentioned above, during operation it is necessary to empty the water container in certain maintenance intervals. Therefore, the water container can be provided with a corresponding valve mechanism. In order to provide a possibility of detecting the actual water level within the water container, a further embodiment of the invention provides an indication means arranged within the water container.

In the following the invention is described with regard to the attached figures, wherein:
- Fig. 1: shows a fuel tank arrangement, which is not claimed, in a perspective view, and
- Fig. 2: shows a fuel tank arrangement according to the invention.

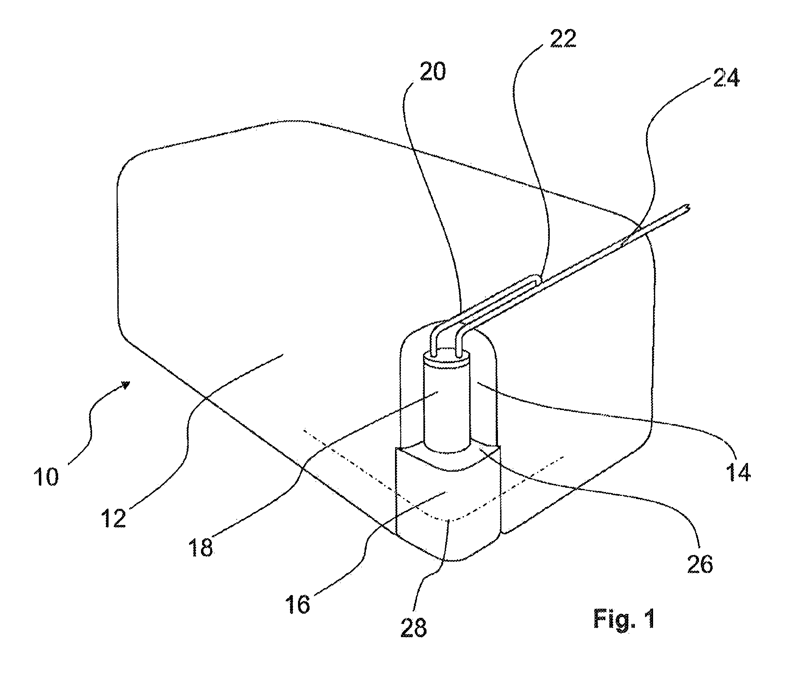

A fuel tank arrangement 10, which is not claimed, as shown in fig. 1, comprises a hollow fuel tank 12, which has a substantially cuboid form with rounded edge regions. Such a fuel tank arrangement 10 can be mounted within a heavy load vehicle which is driven by a diesel engine. Thus, the fuel tank arrangement 10 is provided for storing diesel fuel. As well known in the art, diesel fuel can include a certain proportion of water, which must be separated from the diesel fuel before supplying it to the combustion engine.

As depicted in fig. 1, the fuel tank 12 has an edge region, which is depressed into the fuel tank 12 in order to provide a recess 14. In this recess 14, a water container 16 as well as a filter element 18 is provided. A suction line 20 which is drawn out of the interior of the fuel tank 12 runs to the filter element 18. Moreover, a supply line 24 leading filtered fuel from the filter element 18 to the engine (not depicted) is running substantially parallel to the suction line 20.

As shown in fig. 1, the filter element 18 is directly arranged above the water container 16 and coupled thereto such that both components, the filter element 18 and the water container 16, form a stabile unit.

As can be seen from fig. 1, the geometry of the water container 16 is adapted to the recessed edge portion 14 of the fuel tank 12. This can be particularly recognized when viewing the upper surface 26 of the water container 16, on which the filter element 18 is mounted. The water container 16 is formed such that the unit including the water container 16 and the filter element 18 does not protrude over a generated shell surface of the fuel tank 12, provided that it "virtually" has no recess. Such a generated shell surface of a virtually non-recessed fuel tank is indicated by the chain line 28 running around the recessed edge portion.

The fuel tank arrangement 10 operates as well known in the art. Diesel fuel is sucked out of the interior of the fuel tank 12 via the suction line 20 and led to the filter element 18. In the filter element 18, the diesel fuel containing a certain proportion of water is filtered such that the water is separated from the fuel. The filtered, i.e. substantially water-free, diesel fuel is led via supply line 24 to the engine. The water separated from the diesel fuel, however, is stored within the water container 16.

By providing a fuel tank arrangement 10 according to the invention, it is possible to arrange the two components filter element 18 and water container 16 outside the fuel tank 12 in a recessed edge portion. Such arrangement provides easy access to these two components filter element 18 and water container 16. Therefore, it is easy to empty the water container 16 by using a (not depicted) valve element. Moreover, the filter element 18 is easily accessible and can be cleaned or replaced for maintenance purposes easily in a less time-consuming manner compared to prior art arrangements.

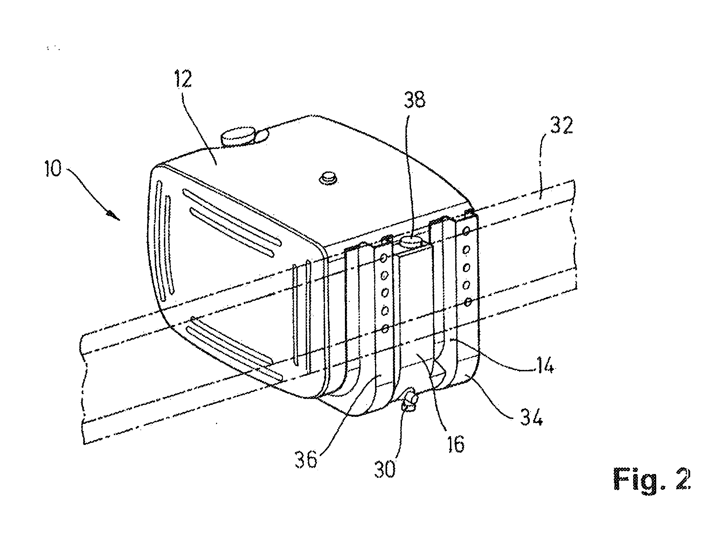

Fig. 2 shows the fuel tank arrangement 10 according to the invention. Again, a nearly cuboid fuel tank 12 is provided with a water container 16 in a space-saving manner. The fuel tank 12 comprises two carrier elements 34, 36 mounted to the outer periphery of the fuel tank 12. The carrier elements 34 and 36 provide a fuel tank mounting structure, which serves for fixing said fuel tank 12 to a longitudinal beam member 32 of the vehicle chassis. The two carrier elements 34 and 36 are therefore provided with a plurality of fixing holes, as depicted in fig. 2. The two carrier elements 34 and 36 are arranged at the fuel tank 12 in a certain distance from one another. Thereby they form a gap or recess 14 wherein the water container 16 is arranged in a space-saving manner. The water container 16 is connected to a non-depicted filter element by means of a water supply line 38. Moreover, one can see that the water container 16 is provided at its bottom with a valve element 30 for emptying it.

Also a combination of what is shown in figures 1 and 2 is possible, such that the water container 16 as well as the filter element are arranged in the recess formed between the two carrier elements 34 and 36.

## Claims

1. Fuel tank arrangement (10) for a vehicle, in particular for a heavy load vehicle driven by a diesel engine, said fuel tank arrangement (10) comprising:
- a fuel tank (12) for receiving and storing fuel,
- a fuel filter element (18) for separating water from the stored fuel,
- a water container (16) for storing water separated from the fuel,
**characterized in that** said fuel tank (12) is provided with a fuel tank mounting structure (34, 36) for mounting said fuel tank (12) to a vehicle chassis (32), wherein said fuel tank mounting structure 34, 36 forms a recess (14) in which said water container (16) is accommodated.

2. Fuel tank arrangement (10) according to claim 1,
**characterized in that** said fuel tank mounting structure (34, 36) comprises two carrier elements mounted to the outer periphery of said fuel tank (12).

3. Fuel tank arrangement (10) according to any of the preceding claims,
**characterized in that** said fuel filter element (18) is also arranged within said recess (14) to be accessible from the outside of the fuel tank (12).

4. Fuel tank arrangement (10) according to claim 3,
**characterized in that** said filter element (18) and said water container (16) are connected to each other.

5. Fuel tank arrangement (10) according to any of the preceding claims,
**characterized in that** said water container (16) includes a valve mechanism (30) for emptying it.

6. Fuel tank arrangement (10) according to any of the preceding claims,
**characterized in that** said water container (16) includes an indication means for indicating an actual water level.

## Patentansprüche

1. Kraftstofftankanordnung (10) für ein Fahrzeug, Insbesondere für ein von einem Dieselmotor angetriebenes Schwerlastfahrzeug, wobei die Kraftstofftankanordnung (10) umfasst:
- einen Kraftstofftank (12) zum Aufnehmen und Spelchern eines Kraftstoffs;
- ein Kraftstofffilterelement (18), um von dem gespeicherten Kraftstoff Wasser abzusondern,
- einen Wasserbehälter (16) zum Speichern des von dem Kraftstoff abgesonderten Wassers,
**dadurch gekennzeichnet, dass** der Kraftstofftank (12) mit einer Kraftstofftankbefestigungsstruktur (34, 36) zum Anbringen des Kraftstofftanks (12) an einem Fahrzeugchassis (32) versehen ist, wobei die Kraftstofftankbefestigungsstruktur (34, 36) eine Ausnehmung (14) aufweist, in der der Wasserbehälter (16) angeordnet ist.

2. Kraftstofftankanordnung (10) nach Anspruch 1,
**dadurch gekennzeichnet, dass** die Kraftstofftankbefestigungsstruktur (34, 36) zwei Trägerelemente aufweist, die an der Außenoberfläche des Kraftstofftanks (12) angeordnet sind.

3. Kraftstofftankanordnung (10) nach einem der vorangehenden Ansprüche,
**dadurch gekennzeichnet, dass** das Kraftstofffilterelement (18) gleichfalls innerhalb der Ausnehmung (14) angeordnet ist, so dass es von außerhalb des Kraftstofftanks (12) zugänglich ist.

4. Kraftstofftankanordnung (10) nach Anspruch 3,
**dadurch gekennzeichnet, dass** das Filterelement (18) und der Wasserbehälter (16) miteinander verbunden sind.

5. Kraftstofftankanordnung (10) nach einem der vorangehenden Ansprüche,
**dadurch gekennzeichnet, dass** der Wasserbehälter (16) einen Ventilmechanismus (30) um Entleeren aufweist.

6. Kraftstofftankanordnung (10) nach einem der vorangehenden Ansprüche,
**dadurch gekennzeichnet, dass** der Wasserbehälter (16) ein Anzeigemittel zum Anzeigen eines aktuellen Wasserstands aufweist.

## Revendications

1. Agencement de réservoir de carburant (10) pour un véhicule, en particulier un poids lourd entraîné par un moteur diesel, ledit agencement de réservoir de carburant (10) comprenant :
- un réservoir de carburant (12) pour recevoir et stocker du carburant,
- un élément filtre de carburant (18) pour séparer l'eau du carburant stocké,
- un conteneur d'eau (16) pour stocker l'eau séparée du carburant,
**caractérisé en ce que** ledit réservoir de carburant (12) est pourvu d'une structure de montage de réservoir de carburant (34, 36) pour le montage dudit réservoir de carburant (12) sur un châssis de véhicule (32), ladite structure de montage de réservoir de carburant (34, 36) formant un évidement (14) dans lequel est logé ledit conteneur d'eau (16).

2. Agencement de réservoir de carburant (10) selon la revendication 1, **caractérisé en ce que** ladite structure de montage de réservoir de carburant (34, 36) comprend deux éléments porteurs montés sur la périphérie extérieure dudit réservoir de carburant (12).

3. Agencement de réservoir de carburant (10) selon l'une quelconque des revendications précédentes, **caractérisé en ce que** ledit élément filtre de carburant (18) est également disposé à l'intérieur dudit évidement (14) de façon à être accessible depuis l'extérieur du réservoir de carburant (12).

4. Agencement de réservoir de carburant (10) selon la revendication 3, **caractérisé en ce que** ledit élément filtre (18) et ledit conteneur d'eau (16) sont reliés entre eux.

5. Agencement de réservoir de carburant (10) selon l'une quelconque des revendications précédentes, **caractérisé en ce que** ledit conteneur d'eau (16) comprend un mécanisme de valve (30) lui permettant d'être vidé.

6. Agencement de réservoir de carburant (10) selon l'une quelconque des revendications précédentes, **caractérisé en ce que** ledit conteneur d'eau (16) comprend des moyens d'indication pour indiquer un niveau d'eau effectif.
